# EUROPEAN PATENT SPECIFICATION

(11) **EP 2 108 622 B1**
(45) Date of publication and mention of the grant of the patent: **07.09.2011**
(21) Application number: 09157767.6
(22) Date of filing: 09.04.2009
(51) Int. Cl.: C03B 7/00, C03B 7/10, C03B 7/12

(54) **Method and assembly for cutting a molten glass rope on a glassware molding machine**
Verfahren und Anordnung zum Schneiden von einem geschmolzenen Glasstrang auf einer Glaswarenformungsmaschine
Procédé et ensemble pour découper un fil de verre fondu sur une machine de moulage de verrerie

(30) Priority: 11.04.2008 IT TO20080281
(43) Date of publication of application: 14.10.2009
(73) Proprietor: Bottero S.p.A., 12010 Cuneo (IT)
(72) Inventor: Balbi, Mario, 12100, CUNEO (IT)
(74) Representative: Jorio, Paolo

(56) References cited:
- DE-A1- 10 062 826
- JP-A- 5 085 743
- JP-A- 6 048 746
- JP-A- 6 345 444
- US-A- 1 748 550
- US-A- 1 775 199

## Description

The present invention relates to a method and assembly for cutting a molten glass rope on a glassware molding machine.

In glassware molding, so-called I.S. molding machines are known, which comprise a forming assembly for forming a molten glass rope; and a cutting assembly, known as "parallel shears", for mechanically cutting the rope crosswise into a succession of glass gobs. Accordingly, the cutting assembly comprises two shear-type cutters substantially facing each other and movable in opposite directions, perpendicularly to the travelling direction of the molten glass rope, between a withdrawn rest position, in which they let the rope through and are sprayed with a jet of coolant, and a forward cutting position, in which they cut the rope crosswise into a succession of glass gobs. Each cutter is moved between the rest and cutting positions by a respective linear actuator comprising an outer casing housing a lubricated, normally oil-lubricated, drive; a sliding rod supporting the relative cutter; and a fluidtight sealing device interposed between the rod and the casing.

Though widely used, the above method of cutting molten glass ropes is far from satisfactory, mainly on account of the cutters having to be sprayed with coolant. In contact with the cutting assembly, part of the coolant is evaporated by the intense heat, and forms a thick vapour around the machine, thus making for an unhealthy working environment. Another part of the coolant hitting the cutting assembly flows off onto the machine parts underneath, taking with it residue and contaminants that foul the machine and must be cleaned off periodically.

Because of the coolant, the sealing devices on the actuators of relatively moving parts, and all the sealing devices around the cutting assembly in general, operate in a highly aggressive environment and wear out relatively fast.

Moreover, coolant feed must be controlled precisely, to prevent it, as far as possible, from coming into contact with the molten glass rope.

Finally, known cutting assemblies are structurally massive and of considerable weight.

From US-A-1 775 199, US-A-1 748 550, JP 06 345 444A JP 05 085743A and JP 06 048746A it is known to cut a molten glass rope supplying thermal energy to a cutting portion of the molten glass rope to locally alter the viscosity of the molten glass rope itself. The disclosed cuts do not enable to increase the thermal energy to the same cutting portion.

It is an object of the present invention to provide a method of cutting molten glass ropes, designed to provide a straightforward, low-cost solution to the above problems.

According to the present invention, there is provided a method of cutting a molten glass rope on a glassware molding machine, as claimed in claim 1.

The present invention also relates to a cutting assembly for cutting molten glass ropes.

According to the present invention, there is provided a cutting assembly for cutting a molten glass rope on a glassware molding machine, as claimed in claim 10

A non-limiting embodiment of the invention will be described by way of example with reference to the 25 accompanying drawings, in which:
Figure 1 shows a schematic side view of a glassware molding machine comprising a cutting assembly for cutting a molten glass rope in accordance with the teachings of the present invention;
Figure 2 shows a larger-scale section of the Figure 1 cutting assembly;
Figure 3 shows a partly sectioned variation of a detail in Figure 2.

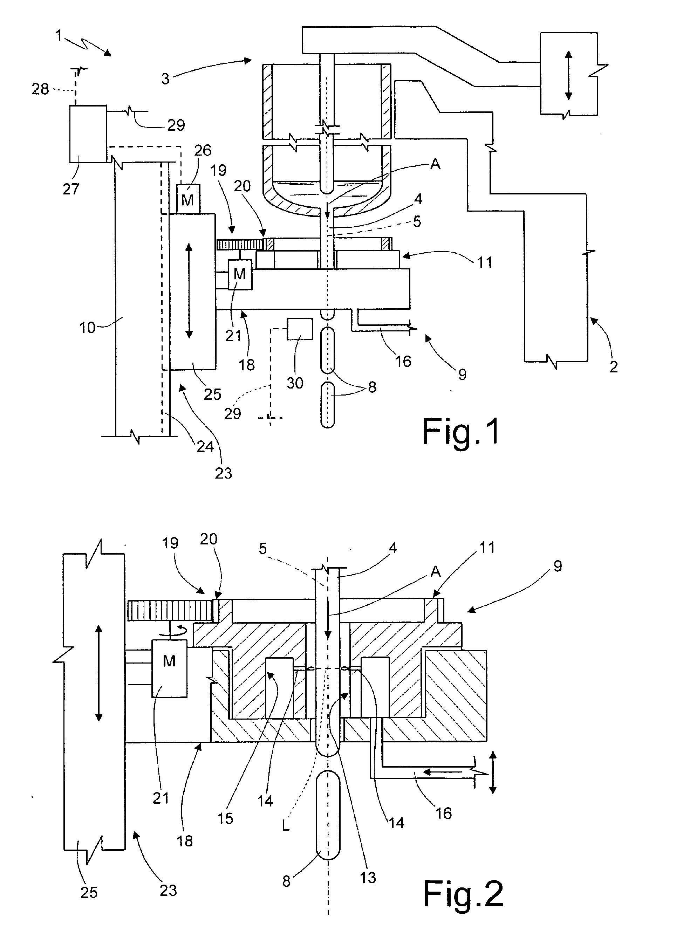

Number 1 in Figure 1 indicates as a whole a so-called I.S. machine for molding glass articles (not shown). Machine 1 comprises a frame 2, which supports an extruder 3 for forming a molten glass rope 4 having an axis 5 and fed in a straight direction A coincident with axis 5. On machine 1, molten glass rope 4 is cut crosswise along lines L into a succession of glass gobs 8 by a cutting assembly 9.

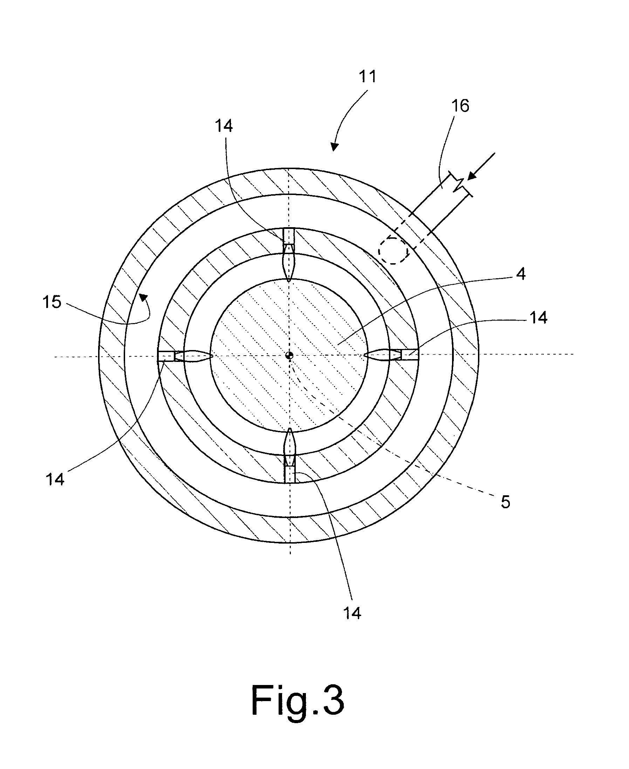

Cutting assembly 9 comprises a fixed mounting structure 10 connected integrally to frame 2 of machine 1; and a heating head 11 fitted to structure 10, as described in detail below, and surrounding rope 4 coaxially with axis 5. In the example shown, heating head 11 is bounded by a cylindrical inner surface 13, which extends coaxially with axis 5 of rope 4 and defines a loose passage for rope 4. At least two heat sources 14 extend partly through cylindrical surface 13 on diametrically opposite sides of rope 4 (Figure 2). Here and hereinafter, the term "heat source" is intended to mean a source capable of supplying thermal energy to the molten glass rope, to locally alter the viscosity of the glass. In the example described, the heat sources comprise gas burners, or ultrasound or laser or electromagnetic wave devices. The Figure 3 variation comprises two pairs of heat sources 14. In a variation not shown, the molten glass rope is heated locally by one heat source. Regardless of the number of heat sources 14 employed - which is selected, for example, as a function of the quality of the glass mass and the size of the molten glass rope, heat sources 14 communicate with a common annular cavity 15 containing a mass of gas, or a gas mixture, fed to the annular chamber by a feed conduit 16.

Heating head 11 is supported in axially fixed and rotary manner about axis 5 by a support 18, which partly defines annular cavity 15, and through which conduit 16 extends. Heating head 11 is rotated with respect to support 18 in opposite directions about axis 5 by a rotary actuator 19 comprising a mechanical gear transmission 20 and an electric or hydraulic drive motor 21. In an alternative variation not shown, actuator 19 only comprises a drive motor connected directly to an input shaft of head 11.

As shown in Figure 1, support 18 is in turn connected to structure 10 of assembly 9 by a powered guide-slide assembly 23, which allows support 18, and hence heating head 11, to move both ways in direction A. More specifically, guide-slide assembly 23 comprises a straight guide 24 connected integrally to fixed structure 10 and extending parallel to axis 5; and a slide 25 fitted in sliding manner to guide 24, and from which support 18 projects integrally. Slide 25 is moved in opposite directions along guide 24 by a variable-speed motor reducer 26 controlled by an electronic unit 27. Unit 27 is also connected electrically to motor 21, and is supplied with a signal 28 indicating the travelling speed of rope 4 in direction A, and with a signal from a gob release detecting device 30.

Operation of assembly 9 will now be described as of the condition in which rope 4 extends through the passage in heating head 11 and is travelling in direction A; and head 11 is set to a raised zero or heat-start position corresponding to an intermediate portion of rope 4 to be cut along line L.

As of the above condition, heat sources 14 are activated to supply thermal energy locally to molten glass rope 4 and gradually alter its viscosity. At the same time, head 11 is moved down by guide-slide assembly 23 at the same travelling speed as rope 4, so as to supply thermal energy to the same intermediate cutting portion of rope 4, and is rotated about axis 5 of rope 4 by motor 21. As rope 4 and head 11 move down, the viscosity of the intermediate portion of molten glass rope 4 is gradually reduced until the mass of glass below the intermediate portion is eventually detached by its own weight from the rest of the rope to form gob 8. At this point, head 11, now in a lowered gob release position, is stopped, heat sources 14 are deactivated, and head 11 is immediately backed up into the zero position to make another crosswise cut of rope 4 in the same way as described above.

When head 11 comprises one or a pair of heat sources, thermal energy supply is concentrated at only one or two diametrically opposite points respectively of molten glass rope 4; whereas, in the case of numerous pairs of heat sources, thermal energy is distributed more widely about rope 4. By rotating head 11, and so moving heat sources 14 about rope 4, thermal energy is distributed evenly about rope 4 to produce a "blade effect" for a faster, better quality cut.

Which of the above solutions to adopt depends on various factors, such as the chemical and physical characteristics and the external dimensions of the molten glass rope, and the gob output rate.

As compared with known solutions, the cutting method described, and assembly 9 implementing the method, clearly provide, above all, for cutting the molten glass rope with no need for coolant or lubricating-cooling fluid, thus eliminating all the problems associated with workplace contamination, wear, rope adulteration, and precise fluid supply control.

Assembly 9 described also provides for reducing the weight and, above all, the manufacturing and running cost of complex known shear-type cutting systems, while at the same time achieving precise cuts at low cost and with no alterations to the production cycle of the machine.

Clearly, changes may be made to assembly 9 as described herein without, however, departing from the protective scope defined in the accompanying Claims. In particular, head 11 may be formed differently from the one described by way of example, and in particular may comprise thermal energy dispensing devices other than those described, and arranged to distribute the thermal energy in the best possible way about the rope.

Changes may also be made to the devices for lowering the head together with the rope to "track" heat the rope. Tracking the rope keeps the heat source in contact with the cutting portion of the rope longer, and so increases the amount of heat yielded to the cutting portion. Changes may also be made to the device for rotating heat sources 14 on head 11 about rope 4 to distribute the thermal energy evenly.

Lastly, actuator 19 for rotating heat sources 14 with respect to rope 4 may obviously be eliminated, if simply moving the head in the travelling direction A of rope 4 is sufficient to detach the glass gob.

## Claims

1. A method of cutting a molten glass rope (4) on a glassware molding machine (1), the method comprising the steps of feeding the molten glass rope (4) in a feed direction (A) and cutting a cutting portion of the molten glass rope crosswise to form a glass gob (8) by supplying thermal energy to said cutting portion of the molten glass rope, to locally alter the viscosity of the molten glass rope (4) **characterized in that** thermal energy is supplied using a heating head (11) and by feeding the heating head (11) parallel to said feed direction (A) of the molten glass rope (4) and substantially at the same travelling speed as the molten glass rope (4).

2. A method as claimed in claim 1, **characterized in that** thermal energy is supplied for such a length of time that the gob is detached by its own weight.

3. A method as claimed in Claim 1 or 2, **characterized in that** said thermal energy is supplied to at least one point of said molten glass rope (4).

4. A method as claimed in Claim 1 or 2, **characterized in that** said thermal energy is supplied to at least two diametrically opposite points of said molten glass rope (4).

5. A method as claimed in Claim 1 or 2, **characterized in that** said thermal energy is supplied to a number of points distributed along the outer periphery of said molten glass rope (4).

6. A method as claimed in Claim 1 or 2, **characterized in that** said thermal energy is supplied by distributing the thermal energy evenly along the outer periphery of said molten glass rope (4)

7. A method as claimed in claim 1, **characterized by** comprising the further step of reversing said heating head once said thermal energy is supplied, by moving the heating head (11) in the opposite direction to the feed direction of the molten glass rope (4) and with respect to the molten glass rope, into a position corresponding with the next cutting portion.

8. A method as claimed in any one of the foregoing Claims, **characterized in that** thermal energy is supplied using a heating head, and by moving the heating head with respect to the molten glass rope (4).

9. A method as claimed in Claim 1, **characterized in that** moving the heating head with respect to said molten glass rope (4) comprises the step of rotating the heating head (11) about an axis (5) of said molten glass rope (4).

10. A cutting assembly (9) for cutting a molten glass rope (4) on a glassware molding machine (1), the assembly comprising a heating head (11) for supplying thermal energy to a cutting portion of the molten glass rope (4), to locally alter the viscosity of the molten glass rope **characterized by** also comprising first actuating means (23) for moving said heating head (11) in the same direction as and parallel to a feed direction (A) of said molten glass rope (4), and substantially at the same travelling speed as the molten glass rope (4).

11. An assembly as claimed in Claim 10 **characterized in that** said heating head (4) comprises at least one heat source (14).

12. An assembly as claimed in Claim 10, **characterized in that** said heating head (11) comprises at least two heat sources (14) on diametrically opposite sides of said molten glass rope (4).

13. An assembly as claimed in Claim 10, **characterized in that** said heating head (4) comprises a ring of heat sources (14) arranged along the outer periphery of said molten glass rope (4).

14. An assembly as claimed in Claim 10, **characterized by** also comprising second actuating means (23) for moving said heating head (4), once said thermal energy is supplied, in the opposite direction to the feed direction (A) of the molten glass rope (4) and with respect to the molten glass rope, into a position corresponding with the next cutting portion of the molten glass rope (4).

15. An assembly as claimed in any one of Claims 10 to 14 **characterized by** also comprising third actuating means (19) for rotating the heating head (4) and the relative said heat sources (14) about an axis (5) of said molten glass rope (4).

16. An assembly as claimed in Claim 15, **characterized in that** said heating head (11) is annular, and has an inner periphery slightly larger than the outer periphery of said molten glass rope (4).

17. An assembly as claimed in any one of Claims 10 to 16, **characterized in that** said heating head (11) comprises at least two gas burners (14).

18. An assembly as claimed in Claims 10, **characterized in that** said heating head (11) comprises at least two ultrasound or electromagnetic wave emitting devices.

19. Use of a cutting assembly (9) as claimed in any one of Claims 10 to 18 in a glassware molding machine (1).

## Patentansprüche

1. Ein Verfahren zum Schneiden eines Glasschmelze-Strangs (4) an einer Glaswaren-Formungsmaschine (1), wobei das Verfahren die Schritte des Zuführens des Glasschmelze-Strangs (4) in einer Zuführrichtung (A) und des Schneidens eines Schneideabschnitts des Glasschmelze-Strangs in Querrichtung aufweist, um einen Glasposten (8) auszubilden, indem dem Schneideabschnitt des Glasschmelze-Strangs Wärmeenergie zugeführt wird, um die Viskosität des Glasschmelze-Strangs (4) lokal zu verändern,
**dadurch gekennzeichnet, dass** die Wärmeenergie mittels eines Heizkopfes (11) und durch Zuführen des Heizkopfes (11) parallel zu der Zuführrichtung (1) des Glasschmelze-Strangs (4) und im Wesentlichen mit der gleichen Fortbewegungsgeschwindigkeit wie der Glasschmelze-Strang (4) zugeführt wird.

2. Ein Verfahren gemäß Anspruch 1, **dadurch gekennzeichnet, dass** die Wärmeenergie über einen derart langen Zeitraum zugeführt wird, dass sich der Glasposten durch sein eigenes Gewicht löst.

3. Ein Verfahren gemäß Anspruch 1 oder 2, **dadurch gekennzeichnet, dass** die Wärmeenergie mindestens einem Punkt des Glasschmelze-Strangs (4) zugeführt wird.

4. Ein Verfahren gemäß Anspruch 1 oder 2, **dadurch gekennzeichnet, dass** die Wärmeenergie mindestens zwei diametral entgegengesetzten Punkten des Glasschmelze-Strangs (4) zugeführt wird.

5. Ein Verfahren gemäß Anspruch 1 oder 2, **dadurch gekennzeichnet, dass** die Wärmeenergie einer Anzahl von Punkten zugeführt wird, die entlang dem Außenumfang des Glasschmelze-Strangs (4) verteilt sind.

6. Ein Verfahren gemäß Anspruch 1 oder 2, **dadurch gekennzeichnet, dass** die Wärmeenergie durch gleichmäßiges Verteilen der Wärmeenergie entlang dem Außenumfang des Glasschmelze-Strangs (4) zugeführt wird.

7. Ein Verfahren gemäß Anspruch 1, **dadurch gekennzeichnet, dass** es den weiteren Schritt des Umkehrens des Heizkopfes aufweist, sobald die Wärmeenergie zugeführt wird, indem der Heizkopf (11) in der entgegengesetzten Richtung zu der Zuführrichtung des Glasschmelze-Strangs (4) und bezüglich des Glasschmelze-Strangs in eine Position bewegt wird, die mit dem nächsten Schneideabschnitt korrespondiert.

8. Ein Verfahren gemäß irgendeinem der vorhergehenden Ansprüche, **dadurch gekennzeichnet, dass** die Wärmeenergie mittels eines Heizkopfes und durch Bewegen des Heizkopfes bezüglich des Glasschmelze-Strangs (4) zugeführt wird.

9. Ein Verfahren gemäß Anspruch 1, **dadurch gekennzeichnet, dass** das Bewegen des Heizkopfes bezüglich des Glasschmelze-Strangs (4) den Schritt des Drehens des Heizkopfes (11) um eine Achse (5) des Glasschmelze-Strangs (4) aufweist.

10. Eine Schneidevorrichtung (9) zum Schneiden eines Glasschmelze-Strangs (4) an einer Glaswaren-Formungsmaschine (1), wobei die Vorrichtung einen Heizkopf (11) aufweist, um einem Schneideabschnitt des Glasschmelze-Strangs (4) Wärmeenergie zuzuführen, um die Viskosität des Glasschmelze-Strangs lokal zu verändern,
**dadurch gekennzeichnet, dass** sie ferner erste Betätigungsmittel (23) aufweist, um den Heizkopf (11) in der gleichen Richtung wie und parallel zu einer Zuführrichtung (A) des Glasschmelze-Strangs (4) und im Wesentlichen mit der gleichen Fortbewegungsgeschwindigkeit wie der des Glasschmelze-Strangs (4) zu bewegen.

11. Eine Vorrichtung gemäß Anspruch 10, **dadurch gekennzeichnet, dass** der Heizkopf (4) mindestens eine Wärmequelle (14) aufweist.

12. Eine Vorrichtung gemäß Anspruch 10, **dadurch gekennzeichnet, dass** der Heizkopf (11) mindestens zwei Wärmequellen (14) an diametral entgegengesetzten Seiten des Glasschmelze-Strangs (4) aufweist.

13. Eine Vorrichtung gemäß Anspruch 10, **dadurch gekennzeichnet, dass** der Heizkopf (4) einen Ring von Wärmequellen (14) aufweist, die entlang dem Außenumfang des Glasschmelze-Strangs (4) angeordnet sind.

14. Eine Vorrichtung gemäß Anspruch 10, **dadurch gekennzeichnet, dass** sie ferner zweite Betätigungsmittel (23) aufweist, um den Heizkopf (4), sobald die Wärmeenergie zugeführt wird, in der entgegengesetzten Richtung zu der Zuführrichtung (A) des Glasschmelze-Strangs (4) und bezüglich des Glasschmelze-Strangs in eine Position zu bewegen, die mit dem nächsten Schneideabschnitt des Glasschmelze-Strangs (4) korrespondiert.

15. Eine Vorrichtung gemäß irgendeinem der Ansprüche 10 bis 14, **dadurch gekennzeichnet, dass** sie ferner dritte Betätigungsmittel (19) aufweist, um den Heizkopf (4) und die jeweiligen Wärmequellen (4) um eine Achse (5) des Glasschmelze-Strangs (4) zu drehen.

16. Eine Vorrichtung gemäß Anspruch 15, **dadurch gekennzeichnet, dass** der Heizkopf (11) ringförmig ist und einen Innenumfang aufweist, der geringfügig größer als der Außenumfang des Glasschmelze-Strangs (4) ist.

17. Eine Vorrichtung gemäß irgendeinem der Ansprüche 10 bis 16, **dadurch gekennzeichnet, dass** der Heizkopf (11) mindestens zwei Gasbrenner (14) aufweist.

18. Eine Vorrichtung gemäß Anspruch 10, **dadurch gekennzeichnet, dass** der Heizkopf (11) mindestens zwei Ultraschall- oder elektromagnetische Wellen emittierende Vorrichtungen aufweist.

19. verwendung einer Schneideanordnung (9) gemäß irgendeinem der Ansprüche 10 bis 18 in einer Glaswaren-Formungsmaschine.

## Revendications

1. Procédé pour couper un cordon de verre fondu (4) sur une machine de moulage du verre (1), le procédé comprenant les étapes d'alimentation du cordon de verre fondu (4) dans une direction d'alimentation (A) et de coupe en travers d'une partie de coupe du cordon de verre fondu pour former une paraison de verre (8), en fournissant de l'énergie thermique à ladite partie de coupe du cordon de verre fondu, pour altérer localement la viscosité du cordon de verre fondu (4), **caractérisé en ce que** l'énergie thermique est fournie en utilisant une tête de chauffage (11) et en faisant avancer la tête de chauffage (11) parallèlement à ladite direction d'alimentation (A) du cordon de verre fondu (4) et sensiblement à la même vitesse de déplacement que le cordon de verre fondu (4).

2. Procédé tel que revendiqué dans la revendication 1, **caractérisé en ce que** de l'énergie thermique est fournie pendant une longueur de temps telle que la paraison se détache sous son propre poids.

3. Procédé tel que revendiqué dans la revendication 1 ou 2, **caractérisé en ce que** ladite énergie thermique est fournie à au moins un point dudit cordon de verre fondu (4).

4. Procédé tel que revendiqué dans la revendication 1 ou 2, **caractérisé en ce que** ladite énergie thermique est fournie à au moins deux points diamétralement opposés dudit cordon de verre fondu (4).

5. Procédé tel que revendiqué dans la revendication 1 ou 2, **caractérisé en ce que** ladite énergie thermique est fournie à un certain nombre de points répartis sur la périphérie extérieure dudit cordon de verre fondu (4).

6. Procédé tel que revendiqué dans la revendication 1 ou 2, **caractérisé en ce que** ladite énergie thermique est fournie en répartissant cette énergie thermique uniformément le long de la périphérie extérieure dudit cordon de verre fondu (4).

7. Procédé tel que revendiqué dans la revendication 1, **caractérisé en ce qu'**il comprend l'étape additionnelle de recul de ladite tête de chauffage une fois que ladite énergie thermique a été fournie, en déplaçant la tête de chauffage (11) dans la direction opposée à la direction d'alimentation du cordon de verre fondu (4) et par rapport au cordon de verre fondu, jusqu'à une position qui correspond à la partie de coupe suivante.

8. Procédé tel que revendiqué dans l'une quelconque des revendications précédentes, **caractérisé en ce que** l'énergie thermique est fournie au moyen d'une tête de chauffage et en déplaçant la tête de chauffage par rapport au cordon de verre fondu (4).

9. Procédé tel que revendiqué dans la revendication 1, **caractérisé en ce que** le déplacement de la tête de chauffage par rapport audit cordon de verre fondu (4) comprend l'étape de rotation de la tête de chauffage (11) autour d'un axe (5) dudit cordon de verre fondu (4).

10. Ensemble de coupe (9) pour couper un cordon de verre fondu (4) sur une machine de moulage du verre (1), l'ensemble comprenant une tête de chauffage (11) pour fournir de l'énergie thermique à une partie de coupe du cordon de verre fondu (4) pour altérer localement la viscosité du cordon de verre fondu, **caractérisé en ce qu'**il comprend aussi des premiers moyens d'actionnement (23) pour déplacer ladite tête de chauffage (11) dans la même direction que et parallèlement à une direction d'alimentation (A) dudit cordon de verre fondu (4), et sensiblement à la même vitesse de déplacement que le cordon de verre fondu (4).

11. Ensemble tel que revendiqué dans la revendication 10, **caractérisé en ce que** ladite tête de chauffage (11) comprend au moins une source de chaleur (14).

12. Ensemble tel que revendiqué dans la revendication 10, **caractérisé en ce que** ladite tête de chauffage (11) comprend au moins deux sources de chaleur (14) sur des côtés diamétralement opposés dudit cordon de verre fondu (4).

13. Ensemble tel que revendiqué dans la revendication 10, **caractérisé en ce que** ladite tête de chauffage (11) comprend un anneau de sources de chaleur (14) disposées le long de la périphérie extérieure dudit cordon de verre fondu (4).

14. Ensemble tel que revendiqué dans la revendication 10, **caractérisé en ce qu'**il comprend aussi des deuxièmes moyens d'actionnement (23) pour déplacer ladite tête de chauffage (11), une fois que ladite énergie thermique a été fournie, dans la direction opposée à la direction d'alimentation (A) du cordon de verre fondu (4) et par rapport au cordon de verre fondu, jusqu'à une position correspondant à la partie de coupe suivante du cordon de verre fondu (4).

15. Ensemble tel que revendiqué dans l'une quelconque des revendications 10 à 14, **caractérisé en ce qu'**il comprend en outre des troisièmes moyens d'actionnement (19) pour faire tourner la tête de chauffage (11) et lesdites sources de chaleur correspondantes (14) autour d'un axe (5) dudit cordon de verre fondu (4).

16. Ensemble tel que revendiqué dans la revendication 15, **caractérisé en ce que** ladite tête de chauffage (11) est annulaire et comporte une périphérie intérieure légèrement plus grande que la périphérie extérieure dudit cordon de verre fondu (4).

17. Ensemble tel que revendiqué dans l'une quelconque des revendications 10 à 16, **caractérisé en ce que** ladite tête de chauffage (11) comprend au moins deux brûleurs à gaz (14).

18. Ensemble tel que revendiqué dans la revendication 10, **caractérisé en ce que** ladite tête de chauffage (11) comprend au moins deux dispositifs émetteurs d'ondes ultrasonores ou électromagnétiques.

19. Utilisation d'un ensemble de coupe (9) tel que revendiqué dans l'une quelconque des revendications 10 à 18 dans une machine de moulage du verre (1).
